**Europäisches Patentamt**

(19) **European Patent Office**

**Office européen des brevets**

(11) Veröffentlichungsnummer: **0 077 578**
**B1**

(12) **EUROPÄISCHE PATENTSCHRIFT**

(45) Veröffentlichungstag der Patentschrift:
**05.12.84**

(21) Anmeldenummer: **82200861.1**

(22) Anmeldetag: **09.07.82**

(51) Int. Cl.³: **D 06 N 7/02,** C 23 F 15/00,
C 08 J 5/18, C 08 L 95/00 //
B60R27/00, B62D25/20,
B60R13/08, B05D7/14

(54) **Korrosionsschutzfolie und deren Herstellung.**

(30) Priorität: **20.10.81 DE 3141539**

(43) Veröffentlichungstag der Anmeldung:
**27.04.83 Patentblatt 83/17**

(45) Bekanntmachung des Hinweises auf die Patenterteilung:
**05.12.84 Patentblatt 84/49**

(84) Benannte Vertragsstaaten:
**DE FR GB IT NL SE**

(56) Entgegenhaltungen:
**CH - A - 195 073**
**CH - A - 314 331**
**DE - A - 1 494 517**
**DE - A - 1 640 713**
**DE - A - 2 917 802**
**DE - B - 1 669 275**

(73) Patentinhaber: **Rütgerswerke Aktiengesellschaft,
Mainzer Landstrasse 217, D-6000 Frankfurt
a.Main 1 (DE)**

(72) Erfinder: **Rühl, Karl, Dr., Hochwaldstrasse 13,
D-6350 Bad Nauheim (DE)**
Erfinder: **Bildner, Karlheinz, Odenwaldstrasse 32,
D-6458 Rodenbach 1 (DE)**

## Beschreibung

Gegenstand der Erfindung ist eine perforierte, aufschmelzbare Folie für den Korrosionsschutz von Stahlblechen, insbesondere im Kraftfahrzeugbau, und ihre Herstellung.

Kraftfahrzeugteile wie z.B. das Bodenblech werden üblicherweise mit Schwerfolien auf bituminöser Basis beschichtet. Diese Folien erfüllen zwei Funktionen: Sie wirken schalldämpfend und sind gleichzeitig ein sicherer Korrosionsschutz. Die Beschichtung der Fahrzeugteile erfolgt bei etwa 120°C. Die Folien erweichen dabei so weit, dass sie sich der Form des Stahlbleches anpassen und sich fest mit diesem verbinden. Als nachteilig wird heute das hohe Flächengewicht dieser Folien von 3 bis 4 kg/m² angesehen.

Im Zuge der Energiesparmassnahmen wurden daher neue wirksamere und leichtere Antidröhnsysteme entwickelt, die aber die zu dämpfenden Fahrzeugteile nicht mehr vollständig bedecken und daher die Funktion eines wirksamen Korrosionsschutzes nicht übernehmen können.

Hieraus ergibt sich die Aufgabe, eine leichte Korrosionsschutzfolie zu entwickeln, die sich bei Temperaturen zwischen 100 und 150°C innerhalb von 30 min vollflächig an ein mit Sicken versehenes Stahlblech anlegt und darauf haftet und eine Wärmebeständigkeit von mindestens 160°C sowie eine ausreichende Kältebeständigkeit bis − 40°C aufweist.

Diese Aufgabe wird gelöst durch eine perforierte, aufschmelzbare Folie, die aus einem Gemisch von

60 bis 90 Gew.-% Bitumen, vorzugsweise B 100/25,

0,5 bis 7 Gew.-% Styrolbutadien(SBR)-Kautschuk,

5 bis 25 Gew.-% eines mit Elastomeren modifizierten Bitumens,

0,5 bis 7,5 Gew.-% Naturharz, und

0,5 bis 10 Gew.-% über 160°C beständiger organischer oder anorganischer Fasern besteht und deren Perforation einen Lochdurchmesser von 1,2 und einen Abstand von 5 bis 100 mm hat.

Die erfindungsgemässe Folie hat eine Dichte von 1000 bis 1100 kg/m³ und eine Stärke von 0,8 bis 1,5 mm.

Die Wärmebeständigkeit wird an einem mit der Folie beschichteten gesickten Stahlblech in waagerechter Lage bei 160°C über eine Dauer von 30 min getestet. Dabei darf die Folie nicht von den erhabenen Sicken ablaufen und keine Blasen, Risse oder Kratzer zeigen.

Die Kältebeständigkeit wird an dem beschichteten Blech bei −40°C durch einen Kugelfalltest geprüft. Eine 500 g schwere Kugel wird dabei aus 25 cm Höhe auf die nichtbeschichtete Seite des Blechs fallengelassen. Die Beschichtung darf keine Abplatzung zeigen.

Das Korrosionsschutzverhalten wird durch den Salzsprühtest nach DIN 500 21 untersucht.

Es hat sich gezeigt, dass durch eine Perforation der Folie mit einem Lochdurchmesser von etwa 1,2 mm im Abstand von 5 bis 100 mm zueinander eine Blasenbildung beim Aufschmelzen verhindert wird und die Löcher nach dem Entweichen des eingeschlossenen Gases von dem plastischen Randmaterial vollständig ausgefüllt werden, so dass das Stahlblech vor korrosivem Angriff vollständig geschützt ist.

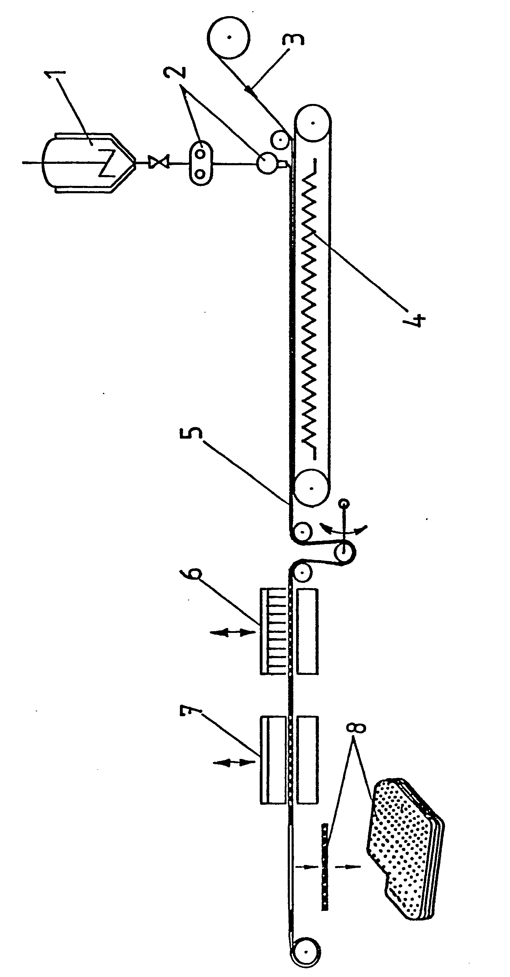

Die Figur zeigt in schematischer Darstellung das Herstellungsverfahren der Korrosionsschutzfolie. Die Mischungskomponenten werden in einer beheizten Mischeinrichtung 1 aufgeschmolzen und homogen durchmischt. Das pastöse Gemisch wird dann über eine Verteilervorrichtung 2, wie z.B. eine Zahnradpumpe mit Breitschlitzdüse, auf ein mit einer Trennfolie 3 belegtes, wassergekühltes Stahlband aufgetragen. Die erkaltete Folie 5 wird mit der Trennfolie 3 vom Band 4 abgezogen, auf einer Lochstanze 6 perforiert und anschliessend auf der Formstanze 7 in die gewünschten Folienzuschnitte 8 zerteilt.

Das Herstellungsverfahren wird anhand der nachstehenden Beispiele erläutert, ohne dadurch die Erfindung zu beschränken.

*Beispiel 1*

74 Gew.-Teile geschmolzenes Bitumen B 80/25 werden mit

3 Gew.-Teilen Styrolbutadien(SBR)-Kautschuk,

15 Gew.-Teilen Ethylenpropylendienterpolymer(EPDM) modifiziertem Bitumen,

3 Gew.-Teilen chinesischem Balsamharz, und

5 Gew.-Teilen gehäckselter Polyesterfaser (Länge <3 mm)

in einem auf 180°C beheizten Knetwerk homogenisiert. Das fertige Gemisch wird mit einer Zahnradpumpe über eine Breitschlitzdüse in einer Dicke von 0,8 mm auf das mit Silikonpapier abgedeckte Kühlband aufgetragen. Die erkaltete Folie wird mit dem Silikonpapier von dem Band abgezogen, perforiert und zugeschnitten. Die Oberseite wird auf das zu beschichtende Sickenblech gelegt und leicht angedrückt, dann kann die Trennfolie abgezogen werden. Das beschichtete Blech wird bei 120°C 30 min lang thermisch behandelt. Die Folie hat sich vollflächig an das Sickenblech angelegt, und die Perforation ist verschwunden. Im Salzsprühtest zeigen die Ränder des kaschierten Blechs keinerlei Rostunterwanderung. Die Folie zeigt auch bei der Prüfung der Kältebeständigkeit keine Abplatzung. Bei einer Wärmebehandlung bei 160°C über 30 min läuft die Folie nicht von den erhabenen Sicken ab und zeigt keine Risse, Kratzer oder Blasen.

*Beispiel 2*

80 Gew.-Teile geschmolzenes Bitumen B 100/25 werden mit

2 Gew.-Teilen SBR-Kautschuk,

12 Gew.-Teilen EPDM-modifiziertem Bitumen,

2 Gew.-Teilen chinesischem Balsamharz, und

4 Gew.-Teilen zerkleinerter Mineralfaser (54% $SiO_2$, 20% CaO, 15% MgO, 12% $Al_2O_3$, 3% $Na_2O$, 5% Fe)

bei 220°C im Rührkessel durchmischt. Das Gemisch wird über eine Wanne mit einer schlitzförmigen Öffnung in einer 1,5-mm-Schicht auf die Trennfolie des Kühlbandes wie in Beispiel 1 gegossen und wie dort weiter verarbeitet und geprüft. Bei keinem der Tests zeigten sich irgendwelche Beanstandungen.

## Patentansprüche

1. Korrosionsschutzfolie mit Perforation zum Aufschmelzen auf Stahlbleche bei 100 bis 150°C innerhalb von 30 min, die im Bereich von −40 bis 160°C eine ausreichende Beständigkeit aufweist, dadurch gekenzeichnet, dass sie aus einem Gemisch von:
60 bis 90 Gew.-% Bitumen, vorzugsweise B 100/25,
0,5 bis 7 Gew.-% SBR-Kautschuk,
5 bis 25 Gew.-% mit Elastomeren modifiziertem Bitumen,
0,5 bis 7,5 Gew.-% Naturharz, und
0,5 bis 10 Gew.-% über 160°C beständiger organischer und/oder anorganischer Fasern besteht und die Perforation einen Lochdurchmesser von 1,2 mm und einen Abstand von 5 bis 100 mm hat.

2. Korrosionsschutzfolie nach Anspruch 1, dadurch gekennzeichnet, dass ihre Dichte 1000 bis 1100 kg/m³ und ihre Dicke 0,8 bis 1,5 mm beträgt.

3. Herstellung der Korrossionsschutzfolie nach den Ansprüchen 1 und 2, dadurch gekennzeichnet, dass die Mischungskomponenten bei 180 bis 220°C aufgeschmolzen und homogenisiert werden, das Fasermaterial untergemischt und das fertige Gemisch über eine Verteilervorrichtung (2) auf ein mit einer Trennfolie (3) belegtes Kühlband (4) aufgetragen wird, und danach die erhaltene Folie zusammen mit der Trennfolie perforiert und zurechtgeschnitten wird.

## Claims

1. An anticorrosion perforated foil for fusion onto steel plates at 100 to 150°C within 30 min, which has a sufficient resistance in the temperature range from −40 to 160°C, characterised by comprising a mixture of:
60 to 90% by weight of bitumen, preferential B 100/25,
0.5 to 7% by weight of styrene-butadiene rubber,
5 to 25% by weight of bitumen modified by elastomers,
0.5 to 7,5% by weight of natural resin, and
0.5 to 10% by weight of organic and/or inorganic fibers stable at above 160°C,
and a perforation with a diameter of 1.2 mm and an interval of 5 to 100 mm.

2. The foil of Claim 1, characterised by a density of in the range from 1,000 to 1,100 kg/m³ and a layer thickness of 0.8 to 1.5 mm.

3. A method of forming the anticorrosion foil of Claims 1 and 2, characterised by melting and homogenising the components of the mixture at 180 to 220°C, adding the fiber material, placing the resulting mixture with a distributing device (2) and a cooling conveyer (4) covered with a separating foil (3), and perforating and cutting the obtained cooled foil together with the separating foil to size.

## Revendications

1. Feuille de protection contre la corrosion à perforations pour dépôt par fusion sur une tôle d'acier, à une température de 100 à 150°C en 30 min, présentant une stabilité suffisante dans une intervalle de −40 à 160°C, caractérisée en ce qu'elle se compose d'un mélange de:
60 à 90% en poids de bitume, de préférence B 100/25,
0,5 à 7% en poids de caoutchouc SBR,
5 à 25% en poids de bitume modifié par des élastomères,
0,5 à 7,5% en poids de résine naturelle, et
0,5 à 10% en poids de fibres organiques et/ou minérales stables à des températures supérieures à 160° C,
et que la perforation a un diamètre de trous de 1,2 mm et un écartement de 5 à 100 mm.

2. Feuille de protection contre la corrosion selon la revendication 1, caractérisée en ce qu'elle possède une densité de 1000 à 1100 kg/m³ et une épaisseur de 0,8 à 1,5 mm.

3. Procédé de fabrication d'une feuille de protection contre la corrosion selon les revendications 1 et 2, caractérisé en ce qu'on soumet les composants du mélange à une fusion à une température de 180 à 220°C et à une homogénéisation, qu'on mélange le matériau fibreux et qu'on applique le mélange obtenu au travers d'un dispositif distributeur (2) sur une bande refroidie (4) recouverte d'une feuille de séparation (3), puis qu'on perfore la feuille obtenue avec la feuille de séparation et qu'on découpe comme désiré.